# EUROPÄISCHE PATENTSCHRIFT

(11) **EP 0 958 732 B1**
(45) Veröffentlichungstag und Bekanntmachung des Hinweises auf die Patenterteilung: **06.11.2002**
(21) Anmeldenummer: 99108307.2
(22) Anmeldetag: 28.04.1999
(51) Int. Cl.: A01D 89/00

(54) **Aufnehmer**
Pick-up
Ramasseur

(30) Priorität: 05.05.1998 US 72646
(43) Veröffentlichungstag der Anmeldung: 24.11.1999
(73) Patentinhaber: DEERE & COMPANY, Moline, Illinois 61265-8098 (US)
(72) Erfinder: Rumph, George William, Bloomfield, Iowa 52537 (US)
(74) Vertreter: Magin, Ludwig Bernhard

(56) Entgegenhaltungen:
- DE-U- 8 613 011
- FR-A- 2 502 455
- GB-A- 1 229 818
- US-A- 1 877 519
- US-A- 3 974 632

## Beschreibung

Die Erfindung betrifft einen Aufnehmer mit einer Welle, darauf gelagerten Zinkenträgern mit Zinken und einer Stütze für die Zinkenträger.

Die DE-A1-2 006 923 offenbart einen Aufnehmer einer Erntemaschine mit einem mittigen Stützlager der Zinkenträger. Hierzu ist auf einem Zentralrohr ein Kreuz vorgesehen, in dessen Armen die jeweiligen Zinkenträger gelagert sind.

Aus der DE-A1-2 753 101 geht ein Aufnehmer hervor, bei dem ein zentrisches Stützlager innenliegende Enden von Zinkenträgern aufnimmt, die sich nur über die Hälfte der Breite des Aufnehmers erstrecken.

Das der Erfindung zugrunde liegende Problem wird darin gesehen, Zinkenträger derart in der Mitte zu lagern, daß sie und gegebenenfalls auch das Stützlager leicht austauschbar sind und auch im Bereich der Lagerung den üblichen Zinkenabstand zulassen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise brauchen sich die Zinkenträger nur bis zu der Stütze zu erstrecken und können bei einem evtl. Schaden von dieser gelöst werden, ohne daß die Stütze selbst oder andere Zinkenträger ausgetauscht werden müßten. Selbst bei einer massiven Fremdkörpereinwirkung, die sich auf das Stützlager selbst auswirkt, muß nicht die Welle ausgetauscht werden, sondern die Stütze kann von der Welle gelöst und ersetzt werden.

Die Verwendung von Halteaugen als Teil der Stütze sorgt für geringe Stück- und Montagekosten, weil auf die Anbringung von separaten Lagern und Kurvenscheiben verzichtet werden kann.

Wenn die Halteaugen beider Seiten zueinander versetzt sind, z. B. um 45 Grad bei vier Zinkenträgern pro Seite, ist ausreichend Platz für die Lagerung der Zinkenträger gegeben, ohne daß sich jeweils zwei Halteaugen decken und alle Kräfte an der gleichen Stelle in die Stütze eingeleitet werden.

Eine einwandfreie Zentrierung der Stütze auf der Welle bzw. dem auf ihr befestigten Flansch ergibt sich dadurch, daß die Stütze eine der Außenkontur des Flansches entsprechende Ausnehmung aufweist, wobei die Kontur vorzugsweise eine Kreisfläche bildet.

Wenn sich die Halteaugen an der Stütze gegenüber den Zinkenträgern befinden, wird eine sehr schmale Bauweise im Bereich des Lagers erzielt, weil die eigentliche Lagerfläche nicht bei der Baubreite für den jeweiligen Zinkenträger mitgerechnet wird.

Ausreichend Bewegungsfreiraum der Zinkenträger während deren Schwenkbewegung wird dadurch erreicht, daß sich nicht deren Schienen, sondern nur deren Zapfen bis zu den Halteaugen erstrecken und in diesen schließlich gelagert sind.

Geringe Stückkosten werden dadurch erzielt, daß die Stütze einstückig und als Gußteil hergestellt wird, der nur noch im Bereich der Flanschaufnahme und der Halteaugen bearbeitet werden muß. Hierbei kann auf verschiedene Gußarten und Legierungen zurückgegriffen werden, die eine hohe Stabilität und gute Gleiteigenschaften erbringen.

Wenn alle Zinken über die gesamte Breite des Aufnehmers den gleichen Abstand zueinander aufweisen, wird ein gleichmäßiges und somit störungsfreies Zuführen des Ernteguts erreicht.

Die Verwendung von Senkkopfschrauben hat den Vorteil, daß keine Kanten im Bereich des Schraubenkopfes offenliegen, die zu einem Verfangen des Materials führen könnten.

In der Zeichnung ist ein nachfolgend näher beschriebenes Ausführungsbeispiel der Erfindung dargestellt. Es zeigt:
- Fig. 1: einen Abschnitt eines erfindungsgemäßen Aufnehmers in Vorderansicht und
- Fig. 2: den Aufnehmer nach Figur 1 in einer Ansicht rechts.

Die Figuren zeigen einen Teil eines Aufnehmers 10 für Erntegut, einer sog. Pick-up, der eine zentrische Welle 12 mit einem kreisförmigen Flansch 14 einschließt, wobei der Flansch 14 aus einer kreisförmigen Platte gebildet ist, die eine mittige Ausnehmung aufweist und an einer mittigen Stelle zwischen den Enden der Welle 12 an diese angeschweißt ist. Der Flansch 14 ist mit unter gleichem Winkel beabstandeten Befestigungslöchern versehen. Eine kreisförmige Stütze 16 für die Mitte eines Zinkenträgers oder einer Zinkenwelle, die als ein kreisförmiger Gußteil mit einer zentrischen Öffnung, die von einer ringförmigen Ausnehmung 17 zur Aufnahme des Flansches 14 umgeben ist, ist mit vier Befestigungslöchern versehen, die jeweils axial fluchtend mit den Befestigungslöchern in dem Flansch 14 angeordnet sind, und ist an dem Flansch 14 mit Schrauben 18, die in diesem Ausführungsbeispiel als Pflugschrauben ausgebildet sind, befestigt, wobei die Schrauben 18 in den aneinander ausgerichteten Befestigungslöchern aufgenommen werden und ihre Schraubenköpfe in Ausnehmungen untergebracht sind, die sich in der Stütze 16 befinden. Bei den Schrauben 18 handelt es sich also um Senkkopfschrauben. Der Grund zum Vorsehen der Ausnehmung 17 und der Verwendung von Pflugschrauben 18 zusammen mit Ausnehmungen für die Schraubenköpfe wird weiter unten erläutert.

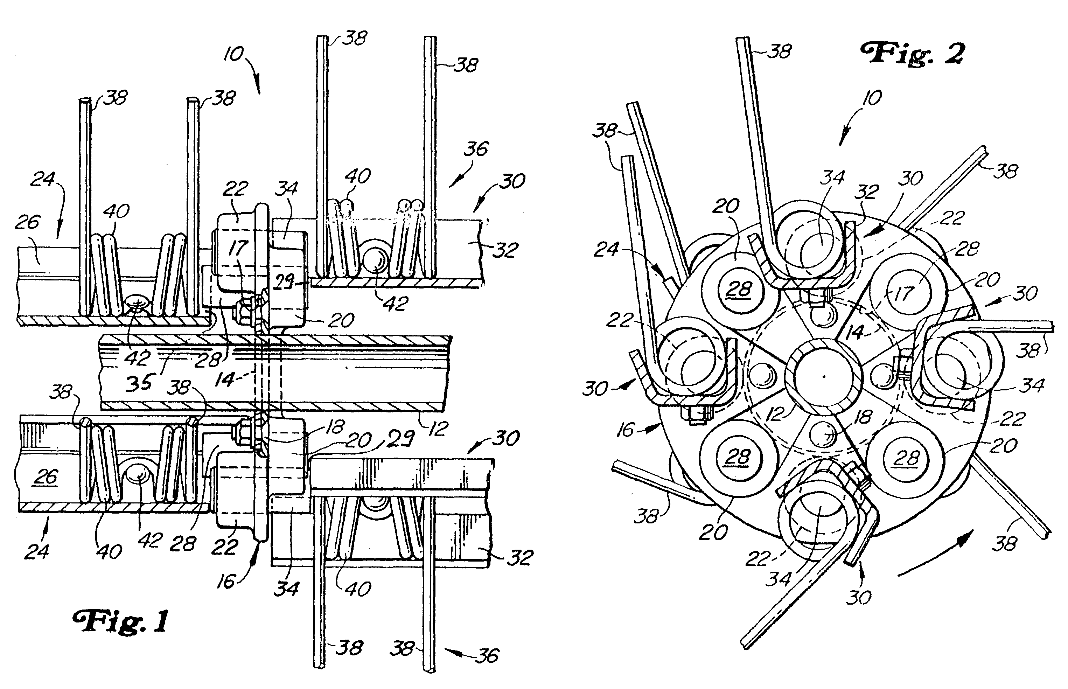

Rechte und linke Sätze von jeweils vier zylindrischen Halteaugen 20 bzw. 24 sind mit Blick auf Figur 1 an gegenüberliegenden Seiten der Stütze 16 an Stellen angeordnet, die einen Abstand gleichen Winkelmaßes zueinander aufweisen, wobei die Sätze unter einem Winkel von 45 Grad zueinander versetzt sind. An jedes rechte Halteauge 20 ist ein Zinkenträger 24 angeschlossen, der auf der linken Seite der Stütze 16 angeordnet ist und eine Schiene 26 in Rinnenform bzw. mit U-förmigem Querschnitt aufweist, an deren rechten Endbereich ein Zapfen 28 in der Form einer Stummelwelle befestigt, z. B. angeschweißt oder angeschraubt, ist, und sich in ein Halteauge 20 erstreckt. Das gegenüberliegende Ende des Zinkenträgers 24 wird ebenfalls von einem nicht gezeigten Zapfen gebildet, wobei jedoch in diesem Fall an den Zapfen ein Kurbelarm angebracht ist und für Montagezwecke mit dem Zinkenträger 24 verschraubt ist. Der Kurbelarm trägt ein Kurvenfolgeglied in der Form einer Rolle, die in einer Kurvenbahn aufgenommen wird, die wiederum so gebildet ist, daß sie eine Schwenkbewegung des Zinkenträgers 24 zum nachfolgend näher beschriebenen Zweck bewirkt. Damit die Schiene 26 während der Schwenkbewegung nicht das Halteauge 22 berührt, ist nahe jedes Zapfens 28 eine Abstandsnut 29 vorgesehen. In gleicher Weise ist an jedes linke Halteauge 22 ein Zinkenträger 30 angeschlossen, der in seiner Konstruktion identisch mit dem Zinkenträger 24 ist und eine wie die Schiene 26 ausgebildete Schiene 32 mit einem in diesem Ausführungsbeispiel ebenfalls als Stummelwelle ausgebildeten Zapfen 34 enthält, der an deren linken Endbereich angeschweißt oder angeschraubt und in einem entsprechenden linken Halteauge 22 aufgenommen ist. Eine Abstandsnut 35 ist nahe des Zapfens 34 in dem Endbereich jeder Schiene 32 vorgesehen. Die Stütze 16 ist derart wärmebehandelt, daß sie eine gute Verschleißcharakteristik aufweist und zwar trotz der Tatsache, daß ein Metall-an-Metall-Gleit-Kontakt zwischen den Zinkenträgern 24, 30 und den Halteaugen 20 und 22 der Stütze 16 besteht.

An jedem Zinkenträger 24, 30 sind auf seiner Länge an Stellen mit gleichem Abstand zueinander eine Vielzahl von Federzinkenzusammenbauten 36 montiert. Jeder Federzinkenzusammenbau 36 ist in bekannter Konstruktion ausgeführt, die in diesem Ausführungsbeispiel als Doppelzinken ausgebildete Zinken 38 mit einem Doppelspiralfederabschnitt 40 aufweist, dessen mittige Schleife von einer Befestigungsschraube 42 durchdrungen wird. Es wird bemerkt, daß der Abstand zwischen der Ebene, die die Zinken 38 am nächsten neben der rechten Seite der Stütze 16 enthält, und der Ebene, die die Zinken 38 am nächsten neben der linken Seite der Stütze 16 der gleiche ist, wie der zwischen den Zinken 38 eines gegebenen Federzinkenzusammenbaus 36. Dies bedeutet mit anderen Worten, daß die Zinken 38 über die gesamte Arbeitsbreite des Aufnehmers 18 einen gleichmäßigen Abstand zueinander aufweisen und daß an der Stütze 16 kein Totbereich entsteht. Indem man also die Zinkenträger 24, 30 in einer Länge herstellt, die nur die Hälfte der Breite des Aufnehmers 10 überspannt, und indem man die Anbringung der Zinkenträger 24 und 30 gegenüber einander so versetzt, daß sich deren jeweilige Zapfen 28 und 34 überlappen, ist es möglich, einen passenden gewünschten Abstand zwischen den Zinken 38 über die Mitte des Aufnehmers 10 vorzusehen, wodurch eine zuverlässige Abgabe aufgenommenen Guts erreicht wird.

Während das vorliegende Ausführungsbeispiel so beschrieben wurde, daß es neben den Stützen an den Enden der Welle 12 und der Stütze 16 in der Mitte der Welle 12 keine andere Stütze 16 für die Zinkenträger 24, 30 enthält, ist dies so zu verstehen, daß bei Zusammenbauten, in denen kein Nocken verwendet wird und die Zinkenträger 24, 30 so montiert sind, daß die Zinken 38 während ihrer Bewegung stets radial ausgerichtet bleiben, eine Vielzahl von Stützen mit Abstand auf der Länge der Welle 14 vorgesehen werden könnten, wobei für die Zinkenträger dann Längen gewählt würden, die den Abstand zwischen benachbarten Stützen überspannen und wobei die Zinkenträger, die sich zwischen innenliegenden Stützen erstrecken, an ihren gegenüberliegenden Endbereichen Zapfen aufweisen, die wie die Zapfen 28 oder 34 ausgebildet sind.

Die Metall-auf-Metall-Passung zwischen jedem Zinkenträger 24, 30 und den Halteaugen 20, 22 ist derart gewählt, daß es dem Zinkenträger 24, 30 erlaubt wird, innerhalb des Halteauges 20, 22 zu schwenken, wie es von den vorgenannten nicht gezeigten Nockeneinheiten, die mit den äußeren Endbereichen der Zinkenträger 24, 30 verbunden sind, aufgegeben wird, wobei diese Schwenkbewegung die Zinken 38 in die korrekte Ausrichtung bringt, um so sauber aus dem geförderten Gut gezogen werden zu können und dieses an dem gewünschten Abgabeort in einer Art verlassen zu können, wie dies im Stand der Technik bekannt ist. Indem in der Stütze 16 die ringförmige Ausnehmung 17 vorgesehen wird und die Schrauben 18 mit ihren Schraubenköpfen in der Stütze 16 aufgenommen werden, wird ein ausreichender Bewegungsfreiraum geschaffen, der die Schwenkbewegung der Zinkenträger 24 und 30 erlaubt.

Es wird davon ausgegangen, daß der Betrieb des Aufnehmers 10 von der vorhergehenden Beschreibung verständlich ist, und diese wird aus Gründen der Kürze nicht wiederholt. Es reicht aus zu erklären, daß der Aufbau mit einer mittigen Stütze 16 und kurzen Zinkenträgern 24, 30 im Vergleich mit einem Aufnehmer, der eine mittige Stütze enthält, die tragende Zinkenträger aufweist, die sich über die volle Länge des Aufnehmers erstrecken, in einem Aufnehmer 10 resultiert, der erheblich reduzierte Torsions- und Biegebelastungen auf der Welle 12, der mittigen Stütze 16, den endseitigen Stützen und den nicht gezeigten Nockenelementen aufweist.

## Patentansprüche

1. Aufnehmer (10), insbesondere für eine Landmaschine, mit einer Welle (12), Zinkenträgern (24, 30), die endseitig gelagert sind und sich parallel zu und über eine Teillänge der Welle (12) erstrecken, mit Zinken (38) auf den Zinkenträgern (24, 30), mit wenigstens einer Stütze (16) zur schwenkbeweglichen Aufnahme der innenliegenden Enden der Zinkenträger (24, 30) und mit einem Flansch (14) auf der Welle (12) zur lösbaren Aufnahme der Stütze (16).

2. Aufnehmer nach Anspruch 1, wobei die Stütze (16) auf ihren gegenüberliegenden Seiten Halteaugen (20, 22) zur schwenkbaren Aufnahme von mit den Zinkenträgern (24, 30) verbundenen Zapfen (28, 34) aufweist.

3. Aufnehmer nach Anspruch 2, wobei die Halteaugen (20, 22) beider Seiten zueinander versetzt sind, vorzugsweise gleichmäßig um 45 Grad.

4. Aufnehmer nach einem oder mehreren der vorherigen Ansprüche, wobei die Welle (12) einen Flansch (14) trägt und die Stütze (16) eine der Außenkontur des Flansches (14) entsprechende Ausnehmung (17) aufweist, wobei die Kontur vorzugsweise eine Kreisfläche bildet.

5. Aufnehmer nach einem oder mehreren der vorherigen Ansprüche, wobei sich die Halteaugen (20, 22) jeweils auf der den aufzunehmenden Zapfen (28, 34) gegenüberliegenden Seite der Stütze (16) befinden.

6. Aufnehmer nach einem oder mehreren der vorherigen Ansprüche, wobei Zinken (38) tragende Schienen (26, 32) der Zinkenträger (24, 30) vor den Halteaugen (20, 22) enden.

7. Aufnehmer nach einem oder mehreren der vorherigen Ansprüche, wobei die Stütze (16) als ein einstückiger Gußteil ausgebildet ist.

8. Aufnehmer nach einem oder mehreren der vorherigen Ansprüche, wobei die ersten Zinken (38) beiderseits der Stütze (16) untereinander denselben Abstand aufweisen wie nachfolgende Zinken (38).

9. Aufnehmer nach einem oder mehreren der vorherigen Ansprüche, wobei zur lösbaren Befestigung der Stütze (16) auf dem Flansch (14) Schrauben (18) mit einem Senkkopf verwendet werden.

## Claims

1. A pick-up (10), especially for an agricultural machine, with a shaft (12), tine carriers (24, 30) which are mounted at the ends and extend parallel to and over part of the length of the shaft (12), with tines (38) on the tine carriers (24, 30), with at least one support (16) for pivotally movable reception of the inner-lying ends of the tine carriers (24, 30) and with a flange (14) on the shaft (12) for releasable reception of the support (16).

2. A pick-up according to claim 1, wherein the support (16) has retaining bosses (20, 22) on its opposite sides for pivotal reception of pins (28, 34) connected to the tine carriers (24, 30).

3. A pick-up according to claim 2, wherein the retaining bosses (20, 22) on the two sides are offset from one another, preferably uniformly by 45 degrees.

4. A pick-up according to one or more of the preceding claims, wherein the shaft (12) carries a flange (14) and the support (16) has a recess (17) corresponding to the outer contour of the flange (14), where the contour preferably forms a circular surface.

5. A pick-up according to one or more of the preceding claims, wherein the retaining bosses (20, 22) are each located on the side of the support (16) opposite the pivot pin (28, 34) to be received.

6. A pick-up according to one or more of the preceding claims, wherein rails (26, 32) carrying tines (38) of the tine carriers (24, 30) terminate before the retaining bosses (20, 22).

7. A pick-up according to one or more of the preceding claims, wherein the support (16) is formed as a one-piece casting.

8. A pick-up according to one or more of the preceding claims, wherein the first tines (38) on the two sides of the support (16) have the same spacing from each other as the following tines (38).

9. A pick-up according to one or more of the preceding claims, wherein screws (18) with a recessed head are used for the releasable fixing of the support (16) on the flange (14).

## Revendications

1. Ramasseur (10), notamment pour une machine agricole, comportant un arbre (12), des porte-dents (24, 30), qui sont montés aux extrémités et s'étendent parallèlement à l'arbre (12) et sur une partie de la longueur de ce dernier et comportant des dents (38) situées sur les porte-dents (24, 30), au moins un support (16) servant à supporter, avec possibilité de pivotement, les extrémités intérieures des porte-dents (24, 30), et une bride (14) montée sur l'arbre (12) pour recevoir de façon amovible le support (16).

2. Ramasseur selon la revendication 1, dans lequel le support (16) comporte, sur ses côtés opposés, des oeillets de retenue (20, 22) servant à loger, avec possibilité de pivotement, des embouts (28, 34) reliés aux porte-dents (24, 30).

3. Ramasseur selon la revendication 2, dans lequel les oeillets de retenue (20, 22) des deux côtés sont décalés entre eux, de préférence uniformément de 45 degrés.

4. Ramasseur selon une ou plusieurs des revendications précédentes, dans lequel l'arbre (12) porte une bride (14), et le support (16) possède un évidement (17), qui correspond au contour extérieur de la bride (14), le contour étant de préférence une surface circulaire.

5. Ramasseur selon une ou plusieurs des revendications précédentes, dans lequel les oeillets de retenue (20, 22) sont situés chacun sur le côté du support (16), qui est situé à l'opposé de l'embout (28, 34) devant être logé.

6. Ramasseur selon une ou plusieurs des revendications précédentes, dans lequel des rails (26, 32), qui portent des dents (38), des porte-dents (24, 30) se terminent devant les oeillets de retenue (20, 22).

7. Ramasseur selon une ou plusieurs des revendications précédentes, dans lequel le support (16) est agencé sous la forme d'une pièce coulée monobloc.

8. Ramasseur selon une ou plusieurs des revendications précédentes, dans lequel les premières dents (38) sont séparés les unes des autres, des deux côtés du support (16), par la même distance que les dents suivantes (38).

9. Ramasseur selon une ou plusieurs des revendications précédentes, dans lequel pour la fixation amovible du support (16) sur la bride (14), on utilise des vis (18) à tête fraisée.
